(19) Europäisches Patentamt
European Patent Office
Office européen des brevets

(11) Numéro de publication: **0 431 996 B1**

(12) **FASCICULE DE BREVET EUROPEEN**

(45) Date de publication de fascicule du brevet: **05.07.95**

(51) Int. Cl.$^6$: **C08L 23/04**, C08L 65/00, //(C08L23/04,65:00)

(21) Numéro de dépôt: **90403226.5**

(22) Date de dépôt: **14.11.90**

(54) **Compositions thermoplastiques à mémoire élastique et leur procédé de préparation.**

(43) Date de publication de la demande:
**12.06.91 Bulletin 91/24**

(45) Mention de la délivrance du brevet:
**05.07.95 Bulletin 95/27**

(84) Etats contractants désignés:
**AT BE CH DE DK ES FR GB GR IT LI LU NL SE**

(56) Documents cités:
**EP-A- 0 018 751**
**FR-A- 2 405 972**

(73) Titulaire: **ELF ATOCHEM S.A.**
**4 & 8, Cours Michelet**
**La Défense 10**
**F-92800 Puteaux (FR)**

(72) Inventeur: **Seguela, Brigitte**
**291 chemin d'en Bas,**
**Hinges**
**F-62232 Annezin (FR)**
Inventeur: **Kaifasz, Patrick**
**19, rue Félix Eboué**
**F-62300 Lens (FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).



Rank Xerox (UK) Business Services
(3.10/3.09/3.3.3)

## Description

La présente invention se rapporte à de nouvelles compositions thermoplastiques à mémoire élastique à base de polyoléfines ainsi qu'à un procédé pour leur préparation.

Des copolymères de l'éthylène et d'au moins une alpha-oléfine ayant de 3 à 8 atomes de carbone, possédant le cas échéant, une faible cristallinité résiduelle et une densité comprise entre 0,850 et 0,890 environ, sont déjà connus et peuvent être préparés par divers procédés. Ces produits sont caractérisés par un compromis de propriétés mécaniques (allongement à la rupture, déformation rémanente après allongement ou compression, dureté Shore) qui traduit une mémoire élastique insuffisante pour un certain nombre d'applications potentielles de ces produits, telles que les joints d'étanchéité, éléments de chaussures, tuyaux souples, éléments amortissants, profilés pour l'industrie du bâtiment et de l'automobile, etc.

Le problème que la présente invention vise à résoudre consiste donc à modifier de tels copolymères éthylène/alpha-oléfine en vue d'atteindre un compromis de propriétés mécaniques qui leur confère une bonne mémoire élastique utilisable pour les applications précitées. Plus précisément, la modification du compromis de propriétés mécaniques que l'on vise à atteindre consiste à :

- augmenter l'allongement à la rupture,
- diminuer la déformation rémanente après allongement ou compression, et
- diminuer la dureté Shore.

Plus précisément encore, le compromis de propriétés mécaniques que l'on vise à atteindre est le suivant :

- un allongement à la rupture au moins égal à 600% environ,
- une déformation rémanente, après 100% d'allongement, ne dépassant pas 32% environ,
- une déformation rémanente à la compression, pendant 72 heures à 70°C, ne dépassant pas 80% environ, et
- une dureté Shore A ne dépassant pas 78 environ.

La présente invention est basée sur le fait de combiner un copolymère éthylène/α-oléfine possédant une densité comprise entre 0,850 et 0,890 cette dernière valeur étant exclue avec un système comprenant au moins un autre polymère thermoplastique de haut poids moléculaire.

Les polymères de relativement haut poids moléculaire sont généralement incompatibles entre eux. Lorsqu'on mélange deux polymères de nature différente, le mélange possède généralement de médiocres propriétés mécaniques telles que résistance à la rupture et allongement à la rupture. Un couple de polymères est rarement suffisamment compatible pour former un mélange possédant des propriétés mécaniques aussi bonnes que celles du moins performant d'entre eux. Cependant, lorsque deux polymères sont compatibles, le mélange résultant peut montrer une combinaison intéressante de propriétés, c'est-à-dire que, outre de bonnes propriété mécaniques, il peut également posséder d'autres caractéristiques favorables.

Ainsi, le brevet US-A-4 203 884 enseigne que des compositions comprenant le mélange d'une polyoléfine cristalline thermoplastique, de polynorbornène et d'une quantité de plastifiant du polynorbornène suffisante pour abaisser sa température de transition vitreuse jusqu'à la gamme des caoutchoucs possèdent des propriétés intéressantes. Plus particulièrement, ce document divulgue des compositions comprenant un mélange de 75 à 10 parties en poids de polyoléfine, de 25 à 90 parties en poids de polynorbornène et, pour 100 parties en poids de polynorbornène, de 30 à 400 parties en poids de plastifiant, lesdites compositions étant élastoplastiques, c'est-à-dire qu'elles possèdent des propriétés élastomériques tout en pouvant être transformées comme des thermoplastiques. A l'état fondu, selon cette technique, une partie du plastifiant peut se trouver présent dans la phase polyoléfine thermoplastique. Après refroidissement, le plastifiant migre substantiellement de la phase polyoléfine cristalline vers la phase polynorbornène pour faire partie de cette dernière. De la sorte, le plastifiant améliore la thermoplasticité ou la capacité de mise en oeuvre de la composition. En règle générale, pour un degré de thermoplasticité donné, la composition requiert d'autant moins de polyoléfine que la quantité de plastifiant est plus importante.

Le brevet US-A-4 203 884 divulgue également des compositions comprenant un mélange de 10 à 90 parties en poids de polyoléfine cristalline et de 90 à 10 parties en poids de polynorbornène réticulé dispersé sous forme de particules de petite taille, et de plastifiant en quantité suffisante pour abaisser la température de transition vitreuse du polynorbornène jusqu'à la gamme des caoutchoucs. Ainsi la réticulation du polynorbornène améliore le compromis des propriétés de la composition, en particulier la résistance à la rupture, la résistance aux solvants et les propriétés à haute température. De telles compositions sont obtenues par un procédé de vulcanisation dynamique selon lequel un mélange de polynorbornène, de plastifiant, de polyoléfine et de réticulants est malaxé à une température suffisante pour réticuler le polynorbornène.

Parmi les polyoléfines cristallines thermoplastiques utilisables selon le brevet US-A-4 203 884, on peut citer le polyéthylène et le polypropylène, ce dernier étant préféré comme le confirme la comparaison des résultats illustrés par les tableaux 1 et 2 du document cité. En particulier, ce document décrit une composition comprenant 30 parties en poids de polynorbornène réticulé et 70 parties en poids d'un polyéthylène de densité 0,960 $g/cm^3$, ladite composition possédant un allongement à la rupture de 170% et une déformation rémanente après allongement égale à 39%. De même, une composition comprenant 10 parties en poids de polynorbornène réticulé et 90 parties en poids de polypropylène possède une dureté Shore D égale à 63, un allongement à la rupture de 390% et une déformation rémanente après allongement égale à 57%.

La présente invention a pour premier objet une composition thermoplastique à mémoire élastique comprenant un mélange de 5 à 20 parties en poids de polynorbornène, de 80 à 95 parties en poids d'au moins une polyoléfine et d'une quantité de plastifiant du polynorbornène suffisante pour abaisser sa température de transition vitreuse jusqu'à la gamme des caoutchoucs, caractérisée en ce que, comme polyoléfine, on choisit une composition comprenant :

- de 80 à 100% d'au moins un copolymère d'éthylène et d'au moins une alpha-oléfine choisie parmi le propylène et le butène-1, ledit copolymère ayant une densité comprise entre 0,850 et 0,890 cette dernière valeur étant exclue et un indice de fluidité compris entre 0,3 et 15 dg/min. et
- de 0 à 20% d'au moins un polymère de propylène.

Des copolymères d'éthylène et d'alpha-oléfine constituant le composant majoritaire de la composition de polyoléfine entrant dans la composition thermoplastique à mémoire élastique selon l'invention sont bien connus de l'homme de l'art et peuvent être préparés par divers procédés.

Ainsi, on connaît une première famille de caoutchoucs polyoléfiniques commercialisés par la société MONTEDISON sous la marque DUTRAL®, consistant en des copolymères de 65 à 80% en moles d'éthylène et de 20 à 35% en moles de propylène, ayant une densité de 0,850 à 0,870, ne possédant aucune cristallinité résiduelle et donc pas de température de fusion cristalline, possédant une masse moléculaire géométrique moyenne de 90 à 100 kg/mole et un indice de polydispersité compris entre 2,2 et 2,9. On connaît également une seconde famille de caoutchoucs polyoléfiniques commercialisés par la société MITSUI sous la marque TAFMER®, consistant en des copolymères de 78 à 92% en moles d'éthylène et de 8 à 22% en moles d'une alpha-oléfine choisie parmi le propylène et le butène-1, ayant une densité de 0,860 à 0,890 cette dernière valeur étant exclue ayant un taux de cristallinité résiduelle de 1 à 14%, une température de fusion cristalline J de 75°C, possédant une masse moléculaire géométrique moyenne de 60 à 120 kg/mole et un indice de polydispersité compris entre 2,2 et 2,7.

Enfin, on peut également choisir un caoutchouc polyoléfinique consistant en un copolymère éthylène/propylène ou éthylène/butène 1 ou éthylène/propylène/butène 1, ayant un indice de fluidité compris entre 0,3 et 15 dg/min. et une densité comprise entre 0,865 et 0,885 comprenant de 77 à 91% en moles de motifs dérivés de l'éthylène et de 9 à 23% en moles de motifs dérivés du propylène et/ou du butène-1, caractérisé par une température de fusion cristalline J comprise entre 100° et 125°C environ. Un tel caoutchouc peut être subsidiairement caractérisé par au moins l'un des éléments suivants :

- un indice de polydispersité compris entre 3,5 et 15, de préférence, entre 4 et 8,
- une masse moléculaire géométrique moyenne (définie comme indiqué ci-après) comprise entre 35 et 70 kg/mole,
- une relation entre la densité d et la teneur x (exprimée en % en moles) en motifs dérivés du propylène et du butène-1 qui se traduit par la double équation :

$$0{,}9084 \leqq d + 0{,}002\,x \leqq 0{,}918$$

- un taux de cristallinité résiduelle (déterminé selon la méthode décrite ci-après) compris entre 3 et 15% environ.

Par température de fusion cristalline J au sens de la présente invention, on entend la température déterminée au maximum de la courbe de fusion après cristallisation obtenue en soumettant l'échantillon de copolymère au processus en trois étapes suivant :

- fusion à la vitesse de 8°C par minute depuis 10°C jusqu'à 150°C, puis
- cristallisation à la vitesse de 8°C par minute depuis 150°C jusqu'à 10°C, puis à nouveau
- fusion à la vitesse de 8°C par minute depuis 10°C jusqu'à 150°C.

Le taux de cristallinité résiduelle selon la présente invention est déterminé par diffraction des rayons X sur un échantillon de copolymère ayant subi un refroidissement à la vitesse de 5°C par heure depuis 190°C jusqu'à la température ambiante.

La masse moléculaire géométrique moyenne est définie, selon la présente invention, par la relation mathématique :

$$\log_{10} Mg = \sum_{i=1}^{i=N} W_i \log_{10} M_i$$

où $W_i$ est la fraction en poids de matière de masse $M_i$ et N est le nombre de fractions éluées par chromatographie sur gel perméable.

De tels copolymères peuvent être obtenus notamment en copolymérisant, à une température de 160 à 270 °C environ et sous une pression de 400 à 850 bars environ, un flux gazeux comprenant de 18 à 42% environ en volume d'éthylène et de 58% à 82% en volume d'oléfines (propylène + butène-1) en prèsence d'un système catalytique de type Ziegler comprenant un activateur organo-aluminium et un composé de métal de transition des groupes IVB, VB, VIB et VIII de la Classification Périodique.

Le polymère de propylène utilisable, en mélange avec le copolymère éthylène/alpha-oléfine, dans la composition thermoplastique à mémoire élastique selon l'invention peut être un copolymère comprenant au moins 80% en moles de motifs dérivés du propylène et jusqu'à 20% en moles de motifs dérivés de l'éthylène ou bien d'une alpha-oléfine ayant de 4 à 8 atomes de carbone.

Par polynorbornène au sens de la présente invention, on entend un polymère ou copolymère amorphe du bicyclo[2,2,1] heptène-2 et de ses dérivés substitués tel que décrit dans le brevet US-A-3 676 390. Parmi les plastifiants du polynorbornène capables d'abaisser sa température de transition vitreuse jusqu'à la gamme des caoutchoucs, on peut citer les huiles lourdes aromatiques, naphténiques ou paraffiniques dérivées du pétrole, de point de congélation inférieur à 0 °C et de point éclair supérieur à 180 °C, et les diesters de l'acide phtalique tels que les phtalates de dioctyle ou de didodécyle. Ces plastifiants peuvent être utilisés purs ou en mélange.

Afin d'améliorer le compromis des propriétés des compositions selon l'invention, il est avantageux d'effectuer la réticulation du polynorbornène, par exemple par un procédé de vulcanisation dynamique. La présente invention a donc pour second objet une composition thermoplastique à mémoire élastique comprenant un mélange de 5 à 20 parties en poids de polynorbornène réticulé, de 80 à 95 parties en poids d'au moins une polyoléfine et d'une quantité de plastifiant de polynorbornène suffisante pour abaisser sa température de transition vitreuse jusqu'à la gamme des caoutchoucs, caractérisée en ce que, comme polyoléfine, on choisit une composition comprenant :

- de 80 à 100% d'au moins un copolymère d'éthylène et d'au moins une alpha-oléfine choisie parmi le propylène et le buténe-1, ledit copolymère ayant une densité comprise entre 0,850 et 0,890 cette dernière valeur étant exclue, et un indice de fluidité compris entre 0,3 et 15 dg/min. environ, et
- de 0 à 20% d'au moins un polymère de propylène.

Le copolymère éthylène/$\alpha$-oléfine présent dans la composition thermoplastique selon l'invention a déjà été décrit ci-dessus de manière détaillée au sujet des compositions comprenant un polynorbornène non réticulé. Dans les compositions thermoplastiques selon l'invention, le polynorbornène plastifié réticulé se présente avantageusement sous forme de petites particules dispersées, ce qui permet à la composition d'être transformée et mise en oeuvre comme n'importe quel matériau thermoplastique.

Tout système de réticulation adapté pour la vulcanisation de caoutchoucs diéniques peut être utilisé pour la réticulation du polynorbornène dans les compositions thermoplastiques selon l'invention. Parmi les agents réticulants satisfaisants pour les caoutchoucs, on peut citer les agents de vulcanisation à base de soufre, de peroxyde, de résine phénolique, de composés de formule :

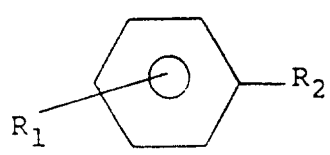

(I)

dans laquelle $R_1$ et $R_2$, identiques ou différents, sont choisis parmi les radicaux $CH_nX_{3-n}$, X étant un atome d'halogène choisi parmi le fluor, le chlore et le brome et n étant un nombre entier allant de 0 à 3, de

composés azo, maléimido, quinoïde et uréthane, tels que, par exemple, du soufre libre ou des composés donneurs de soufre comme le disulfure de tétraméthylthiurame, le disulfure de thiurame, le disulfure de benzothiazyle et l'hexasulfure de dipentaméthylène thiurame, ou encore la m-phénylène bis-maléimide, la benzoquinone dioxime, le peroxyde de plomb, l'hexachloroparaxylène la diorthotolyl guanidine, la 4,4'-dithiodimorpholine, etc. Ces agents de vulcanisation peuvent être avantageusement utilisés en association avec au moins un activateur ou accélérateur de vulcanisation, tel que l'oxyde de zinc, l'oxyde de magnésium, le benzothiazole sulfamide, le chlorure d'étain, le dibutyldithiocarbamate de zinc, le phényléthyldithiocarbamate de zinc, l'éthyldithiocarbamate de tellure, le polyéthylène chlorosulfoné, etc. Lorsque du soufre libre ou un composé donneur de soufre est utilisé comme agent de vulcanisation, il est préférable d'utiliser une quantité importante d'activateur ou accélérateur de vulcanisation, c'est-à-dire, par exemple, un poids d'activateur ou accélérateur compris entre 1 et 3 fois environ le poids d'agent de vulcanisation.

Les constituants du système de réticulation, et notamment l'agent de vulcanisation, sont utilisés dans les proportions usuelles connues de l'homme de l'art pour obtenir la réticulation quasi-complète du polynorbornène sans pour autant réduire son élasticité au point qu'il ne soit plus caoutchouteux. Lorsqu'un composé de formule (I) tel que l'hexachloroparaxylène constitue l'agent de vulcanisation, il est utilisé à raison de 0,1% à 6% en poids environ par rapport au polynorbornène. Dans les compositions thermoplastiques selon l'invention, le polynorbornène est de préférence réticulé jusqu'au point ou pas plus de 10%, de préférence pas plus de 5%, du polynorbornène puisse être extrait par un solvant, tel que le xylène bouillant, dans lequel le polynorbornène non-réticulé est complètement soluble, ainsi que le copolymère éthylène/$\alpha$-oléfine. Ce test d'extraction permet au passage de vérifier que le copolymère éthylène/$\alpha$-oléfine n'a pas lui-même été substantiellement réticulé, ce qui aurait pour effet de nuire à la thermoplasticité de la composition.

Les propriétés des compositions selon l'invention peuvent être avantageusement modifiées, pour les besoins de certains usages particuliers, par l'addition d'ingrédients conventionnels tels que :

- pigments blancs (oxyde de titane) ou colorés,
- agents de couplage, tels que silanes ou titanates,
- antidégradants tels que, par exemple, le sel de zinc du mercaptobenzimidazole,
- stabilisants, tels que, par exemple, la 2,2,4-triméthyl-1,2-dihydroquinoléinepolymérisée,
- adjuvants de mise en oeuvre, tels que des amines aliphatiques à chaîne longue, des sels de l'acide stéarique, etc.
- charges pulvérulentes, telles que noir de carbone, silice, kaolin, alumine, argile, alumino-silicate, talc, carbonate, et
- lubrifiants, tels que l'acide stéarique.

En particulier, l'addition de charges pulvérulentes a pour effet d'améliorer la résistance à la rupture et, dans certains cas, l'allongement à la rupture de la composition thermoplastique selon l'invention. La quantité de charge pouvant être incorporée à la composition peut atteindre jusqu'à 150 parties pour 100 parties en poids de polynorbornène, cette quantité étant bien évidemment variable selon la nature de la charge.

Enfin, pour les applications dans lesquelles on recherche une résistance élevée à l'ozone et/ou au vieillissement thermique, les compositions selon l'invention pourront comprendre un élastomère oléfinique, celui-ci venant en remplacement partiel du polynorbornène, de telle sorte que la somme du copolymère éthylène/$\alpha$-oléfine, du polynorbornène et de l'élastomère oléfinique soit égale à 100 parties en poids. Comme élastomère oléfinique utilisable dans les compositions selon l'invention, on peut citer notamment un terpolymère d'éthylène avec au moins une $\alpha$-oléfine ayant de 3 à 6 atomes de carbone et au moins un diène. Plus particulièrement, on préfère les terpolymères éthylène-propylène-diène, le diène étant choisi parmi les diènes linéaires ou cycliques, conjugués ou non-conjugués comme par exemple le butadiène, l'isoprène, le 1,3-pentadiène, le 1,4-pentadiène, le 1-4-hexadiène, le 1,5-hexadiène, le 1,9 décadiène, le 5-méthylène-2-norbornène, le 5-vinyl-2-norbornène, les 2-alkyl-2,5-norbornadiènes, le 5-éthylidène-2-norbornène, le 5-(2-propényl)-2-norbornène, le 5-(5-hexényl)-2-norbornène, le 1,5-cyclooctadiène, le bicyclo [2,2,2] octa-2,5-diène, le cyclopentadiène, le 4,7,8,9-tétrahydroindène et l'isopropylidène tétrahydroindène. De tels terpolymères élastomériques utilisables conformément à la présente invention comprennent en général entré 15% et 60% en moles de motifs dérivés du propylene et entre 0,1% et 20% en moles de motifs dérivés du diène.

La proportion d'élastomère oléfinique utilisable dans les compositions selon l'invention est généralement telle qu'il remplace jusqu'au tiers du poids du polynorbornène présent.

Les compositions thermoplastiques selon l'invention, dans lesquelles le polynorbornène est réticulé, sont de préférence préparées par vulcanisation dynamique, c'est-à-dire en malaxant un mélange de polynorbornène, de plastifiant, de copolymère éthylène/$\alpha$-oléfine et de système de réticulation (tel que

défini ci-dessus) à une température suffisante et pendant une durée suffisante pour réticuler le polynorbornène. Le malaxage peut être effectué dans un appareillage conventionnel, tel que, par exemple, un malaxeur Banbury, un malaxeur Brabender, un malaxeur Rhéocord ou une extrudeuse, à une température comprise entre 110° et 220°C environ pendant une durée comprise entre 3 et 15 minutes environ, cette durée étant d'autant moins longue que la température est plus élevée. Avant cette étape de malaxage, le mélange peut être d'abord homogénéisé dans un mélangeur interne à température modérée comprise entre 40° et 100°C environ.

Grâce aux moyens particuliers qu'elle met en oeuvre, la présente invention permet d'atteindre des produits possédant :

- un allongement à la rupture au moins égal à 600% environ,
- une déformation rémanente, après 100% d'allongement, ne dépassant pas 32% environ,
- une déformation rémanente à la compression, pendant 72 heures à 70°C, ne dépassant pas 80% environ, et
- une dureté Shore A ne dépassant pas 78 environ.

Plus particulièrement, lorsque le copolymère éthylène/alpha-oléfine a une densité ne dépassant pas 0,875, la présente invention permet d'atteindre des matériaux possédant :

- une dureté Shore A ne dépassant pas 50 environ et
- une déformation rémanente, après 100% d'allongement, ne dépassant pas 30% environ.

Les compositions selon l'invention peuvent être utilisées pour fabriquer des produits finis et articles industriels par les techniques d'extrusion, d'injection-moulage et de moulage par compression ou par toute autre technique adaptée à la transformation d'un matériau thermoplastique. Des applications concrètes des compositions selon l'invention comprennent notamment des joints d'étanchéité, éléments de chaussures, tuyaux souples, éléments amortissants, profilés pour l'industrie du bâtiment et de l'automobile, etc..

Les exemples ci-après sont donnés à titre illustratif et non limitatif de la présente invention.

Exemple 1 (comparatif)

Dans une première étape, du polynorbornène est formulé avec un plastifiant, une charge, un antidégradant, un agent de vulcanisation, un pigment et un lubrifiant, dans un mélangeur interne tournant à 100 tours/min pendant 6 minutes, régulé à 80°C, puis la formulation obtenue est mise sous forme de feuille par passage sur un mélangeur à cylindre régulé à 60°C dans lequel on ajoute un accélérateur de vulcanisation. Dans une seconde étape, la masse caoutchoutique est additionnée d'une polyoléfine cristalline et reprise sur un malaxeur Brabender tournant à 90 tours/min. à une température de 180°C pendant 8 minutes. La composition résultante est récupérée et moulée en plaques de 2,5 mm par compression, sur lesquelles on mesure les propriétés suivantes :

- dureté Shore A déterminée selon la norme NFT 51 109 (le chiffre indiqué dans le tableau ci-après pour cet exemple correspond à une dureté Shore D)
- allongement à la rupture (AR), exprimé en % et déterminé selon la norme NFT 51 034, la mesure étant effectuée sur une éprouvette H3 avec une vitesse de traction de 100 mm/min.
- déformation rémanente, après 100% d'allongement (DRA), exprimée en % et déterminée selon la norme NFT 51 034, la mesure étant effectuée sur une éprouvette micro ASTM avec une vitesse de traction de 500 mm/min.
- flexion de Mattia, exprimée en mm d'entaille après $10^5$ flexions et déterminée selon la norme NFT 51 016.

Dans cet exemple comparatif :

- la polyoléfine est un copolymère éthylène/butène-1 de densité 0,918, possédant un indice de fluidité de 1,1 dg/min., une température de fusion de 122°C et un taux de cristallinité de 35%, commercialisé par la demanderesse sous la dénomination LOTREX,
- le polynorbornène utilisé est commercialisé par la demanderesse sous la dénomination NORSOREX,
- le plastifiant est une huile naphténique commercialisée sous la dénomination PIONEER,
- la charge pulvérulente est du kaolin calciné,

- l'agent de vulcanisation est une résine phénolique de formule :

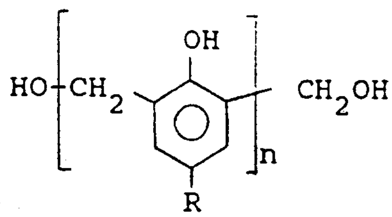

dans laquelle n = 4 ou 5 et R désigne un radical alkyle, commercialisée par la Société SCHENECTADY sous l'appellation SP 1045, et
- l'accélérateur de vulcanisation est un mélange pondéral d'oxyde de zinc, de 1 partie de chlorure stanneux $SnCl_2$, $2H_2O$ et de 1 partie de magnésie, l'ensemble représentant le nombre de parties en poids indiqué au tableau ci-après.

Les quantités pondérales des divers ingrédients de la composition sont indiquées dans le tableau ci-après, ainsi que les résultats des mesures de propriétés effectuées.

Exemples 2 à 7

En opérant dans les mêmes conditions qu'à l'exemple 1, et en utilisant les mêmes ingrédients à l'exception de la polyoléfine, on prépare différentes compositions dont les propriétés sont indiquées dans le tableau ci-après.

La polyoléfine utilisée aux exemples 2 et 3 est un terpolymère comprenant 84,6% en moles de motifs dérivés de l'éthylène, 6,7% en moles de motifs dérivés du propylène et 8,7% en moles de motifs dérivés du butène-1, ayant une densité de 0,881, un indice de fluidité égal à 1,2 dg/min., une température de fusion cristalline J de 107 °C, un indice de polydispersité Mw/Mn de 4,7, un taux de cristallinité résiduelle de 11% et une masse géométrique moyenne de 65 kg/mole. Ce terpolymère a été obtenu sous une pression de 680 bars dans un réacteur à trois zones dont les températures s'échelonnent de 175° à 250 °C en polymérisant un mélange comprenant 45% en volume de butène-1, 17% en volume de propylène et 38% en volume d'éthylène. La polyoléfine utilisée aux exemples 5 et 6 est un mélange de ce terpolymère, d'un polymère de propylène commercialisé par la société HOECHST sous la dénomination HOSTALEN PPK 1032 et d'un mélange-maître (compound) comprenant 40% de $\alpha,\alpha'$ bis (tertiobutylperoxy) m.p.diiso propylbenzène et 60% de terpolymère éthylène/propylène/ diène, commercialisé sous l'appelation PEROXYMON F40MG.

La polyoléfine utilisée à l'exemple 4 est un terpolymère comprenant 78,9% en moles de motifs dérivés de l'éthylène, 11,6% en moles de motifs dérivés du propylène et 9,5% en moles de motifs dérivés du butène-1, ayant une densité de 0,871, un indice de fluidité égal à 2,6 dg/min, un indice de polydispersité de 4,7, une température de fusion cristalline J de 109 °C, un taux de cristallinité résiduelle de 6% et une masse géométrique moyenne de 58 kg/mole. La polyoléfine utilisée à l'exemple 7 est un mélange de ce terpolymère, du polypropylène HOSTALEN PPK 1032 et du mélange-maître PEROXYMON F40MG.

Outre les propriétés décrites à l'exemple 1, on a mesuré, pour ces compositions, la déformation rémanente à la compression (DRC) après 72 heures à 70 °C, exprimée en % et déterminée selon la norme NFT 46 011 au moyen d'une éprouvette de type A. Par ailleurs pour tous ces exemples la dureté est exprimée en Shore A.

TABLEAU

| Exemple | 1 | 2 | 3 | 4 | 5 | 6 | 7 |
|---|---|---|---|---|---|---|---|
| Polynorbornène | 63 | 63 | 95 | 63 | 63 | 95 | 63 |
| Plastifiant | 94 | 94 | 141 | 94 | 94 | 141 | 94 |
| Charge | 25 | 25 | 38 | 25 | 25 | 38 | 25 |
| Agent de vulcanisation | 7 | 7 | 10 | 7 | 7 | 10 | 7 |
| Accélérateur de vulcanisation | 11 | 11 | 16 | 11 | 11 | 16 | 11 |
| Copolymère éthylène/$\alpha$-oléfine(s) | 800 | 800 | 700 | 800 | 700 | 600 | 700 |
| Polypropylène | 0 | 0 | 0 | 0 | 95 | 95 | 95 |
| Peroxymon | 0 | 0 | 0 | 0 | 5 | 5 | 5 |
| Dureté Shore A | 33D | 73 | 71 | 28 | 77 | 75 | 43 |
| Allongement à la rupture | 670 | 1200 | 890 | 810 | 1200 | 920 | 900 |
| D.R.A | 57 | 30 | 24 | 20 | 32 | nd | 17 |
| Flexion de Mattia | 25 | 3 | 3 | nd | 6 | 7 | 11 |
| D R C | nd | nd | nd | nd | 79 | 78 | 64 |
| nd : non déterminé | | | | | | | |

## Revendications

1. Composition thermoplastique à mémoire élastique comprenant un mélange de 5 à 20 parties en poids de polynorbornène, de 80 à 95 parties en poids d'au moins une polyoléfine et d'une quantité de plastifiant du polynorbornène suffisante pour abaisser sa température de transition vitreuse jusqu'à la gamme des caoutchoucs, caractérisée en ce que, comme polyoléfine, on choisit une composition comprenant :
   - de 80 à 100% d'au moins un copolymère d'éthylène et d'au moins une alpha-oléfine choisie parmi le propylène et le butène-1, ledit copolymère ayant une densité comprise entre 0,850 et 0,890 cette dernière valeur étant exclue et un indice de fluidité compris entre 0,3 et 15 dg/min., et
   - de 0 à 20% d'au moins un polymère de propylène.

2. Composition thermoplastique à mémoire élastique comprenant un mélange de 5 à 20 parties en poids de polynorbornène réticulé, de 80 à 95 parties en poids d'au moins une polyoléfine et d'une quantité de plastifiant du polynorbornène suffisante pour abaisser sa température de transition vitreuse jusqu'à la gamme des caoutchoucs, caractérisée en ce que, comme polyoléfine, on choisit une composition comprenant :
   - de 80 à 100% d'au moins un copolymère d'éthylène et d'au moins une alpha-oléfine choisie parmi le propylène et le butène-1, ledit copolymère ayant une densité comprise entre 0,850 et 0,890 cette dernière valeur étant exclue et un indice de fluidité compris entre 0,3 et 15 dg/min., et
   - de 0 à 20% d'au moins un polymère de propylène.

3. Composition thermoplastique à mémoire élastique selon l'une des revendications 1 et 2, caractérisée en ce que le copolymère éthylène/alpha-oléfine comprend de 9 à 23% en moles d'au moins une alpha-oléfine choisie parmi le propylène et le butène-1.

4. Composition thermoplastique selon l'une des revendications 1 à 3, caractérisée en ce qu'elle comprend en outre au moins un élastomère oléfinique, celui-ci venant en remplacement partiel du polynorbornène, de telle sorte que la somme du copolymère éthylène/$\alpha$-oléfine, du polynorbornène et de l'élastomère oléfinique soit égale à 100 parties en poids.

5. Composition thermoplastique à mémoire élastique selon la revendication 3, caractérisée en ce que le copolymère éthylène/$\alpha$-oléfine possède une température de fusion cristalline J comprise entre 100 °C et 125 °C.

6. Composition thermoplastique à mémoire élastique selon l'une des revendications 3 et 5, caractérisée en ce que le copolymère éthylène/$\alpha$-oléfine possède un indice de polydispersité compris entre 3,5 et

15.

**7.** Composition thermoplastique à mémoire élastique selon l'une des revendications 3, 5 et 6, caractérisée en ce que le copolymère éthylène/α-oléfine possède une masse géométrique moyenne comprise entre 35 et 70 kg/mole.

**8.** Composition thermoplastique selon la revendication 2, caractérisée en ce que le polynorbornène est réticulé jusqu'au point où pas plus de 10% du polynorbornène puisse être extrait par un solvant.

**9.** Composition thermoplastique selon l'une des revendications 1 à 8, caractérisée en ce qu'elle comprend en outre au moins un additif choisi parmi les pigments blancs ou colorés, les agents de couplage, les anti-dégradants, les stabilisants, les adjuvants de mise en oeuvre, les charges pulvérulentes et les lubrifiants.

**10.** Composition thermoplastique selon la revendication 9, caractérisée en ce que ledit additif est une charge pulvérulente utilisée à raison de jusqu'à 150 parties pour 100 parties en poids du polynorbornène.

**11.** Procédé de préparation d'une composition thermoplastique selon la revendication 2, caractérisé en ce qu'on malaxe un mélange de polynorbornène, de plastifiant, de copolymère éthylène/α-oléfine et d'un système de réticulation, à une température suffisante et pendant une durée suffisante pour réticuler le polynorbornène.

**12.** Procédé selon la revendication 11, caractérisé en ce que le malaxage est effectué à une température comprise entre 110° et 220°C pendant une durée comprise entre 3 et 15 minutes.

**Claims**

**1.** Thermoplastic composition with elastic memory comprising a mixture of 5 to 20 parts by weight of polynorbornene, 80 to 95 parts by weight of at least one polyolefin and an amount of plasticizer for polynorbornene sufficient for reducing its glass transition temperature down to the range of rubbers, characterized in that the polyolefin chosen is a composition comprising:
- 80 to 100 % of at least one copolymer made of ethylene and at least one alpha-olefin chosen from propylene and 1-butene, the said copolymer having a relative density of between 0.850 and 0.890 the latter value being excluded and a flow index of between 0.3 and 15 dg/min, and
- 0 to 20 % of at least one propylene polymer.

**2.** Thermoplastic composition with elastic memory comprising a mixture of 5 to 20 parts by weight of crosslinked polynorbornene, 80 to 95 parts by weight of at least one polyolefin and an amount of plasticizer for polynorbornene sufficient to reduce its glass transition temperature down to the range of rubbers, characterized in that the polyolefin chosen is a composition comprising:
- 80 to 100 % of at least one copolymer made of ethylene and at least one alpha-olefin chosen from propylene and 1-butene, said copolymer having a relative density of between 0.850 and 0.890 the latter value being excluded and a flow index of between 0.3 and 15 dg/min, and
- 0 to 20 % of at least one propylene polymer.

**3.** Thermoplastic composition with elastic memory according to one of Claims 1 and 2, characterized in that the ethylene/alpha-olefin copolymer comprises 9 to 23 mol% of at least one alpha-olefin chosen from propylene and 1-butene.

**4.** Thermoplastic composition according to one of Claims 1 to 3, characterized in that it furthermore comprises at least one olefinic elastomer, which serves as partial replacement for the polynorbornene, so that the sum of the ethylene/α-olefin copolymer, the polynorbornene and the olefinic elastomer is equal to 100 parts by weight.

**5.** Thermoplastic composition with elastic memory according to Claim 3, characterized in that the ethylene/α-olefin copolymer has a crystalline melting temperature J between 100°C and 125°C.

6. Thermoplastic composition with elastic memory according to one of Claims 3 and 5, characterized in that the ethylene/α-olefin copolymer has a polydispersity index between 3.5 and 15.

7. Thermoplastic composition with elastic memory according to one of Claims 3, 5 and 6, characterized in that the ethylene/α-olefin copolymer has a geometric average molecular mass of between 35 and 70 kg/mole.

8. Thermoplastic composition according to Claim 2, characterized in that the polynorbornene is crosslinked to such an extent that not more than 10 % of polynorbornene can be extracted with a solvent.

9. Thermoplastic composition according to one of Claims 1 to 8, characterized in that it further comprises at least one additive chosen from white or coloured pigments, coupling agents, antidegradation agents, stabilizers, processing aids, powdered fillers and lubricants.

10. Thermoplastic composition according to Claim 9, characterized in that the said additive is a powdered filler employed in an amount of up to 150 parts by weight per 100 parts by weight of polynorbornene.

11. Process for the preparation of a thermoplastic composition according to Claim 2, characterized in that a mixture of polynorbornene, plasticizer, ethylene/α-olefin copolymer and a crosslinking system is kneaded at a sufficient temperature and for a sufficient period to crosslink the polynorbornene.

12. Process according to Claim 11, characterised in that the kneading is carried out at a temperature of between 110° and 220°C over a period of between 3 and 15 minutes.

**Patentansprüche**

1. Elastische Nachwirkung aufweisende thermoplastische Zusammensetzung, enthaltend eine Mischung aus 5 bis 20 Gewichtsteilen Polynorbornen, 80 bis 95 Gewichtsteilen mindestens eines Polyolefins und einer ausreichenden Menge eines Weichmachers für Polynorbornen, um die Glasübergangstemperatur bis zu dem Bereich von Kautschuk zu senken, dadurch gekennzeichnet, daß man als Polyolefin eine Mischung wählt, enthaltend:
   - 80 bis 100 % mindestens eines Ethylencopolymers und mindestens eines α-Olefins, ausgewählt aus Propylen und 1-Buten; dieses Copolymer hat eine Dichte zwischen 0,850 und 0,890 - der letzte Wert ist ausgeschlossen - und einen Fließindex zwischen 0,3 und 15 dg/min., und
   - 0 bis 20 % mindestens eines Propylenpolymers.

2. Elastische Nachwirkung aufweisende thermoplastische Zusammensetzung, enthaltend eine Mischung aus 5 bis 20 Gewichtsteilen vernetzten Polynorbornens, 80 bis 95 Gewichtsteilen mindestens eines Polyolefins und einer ausreichenden Menge eines Weichmachers für Polynorbornen, um die Glasübergangstemperatur bis zu dem Bereich von Kautschuk zu senken, dadurch gekennzeichnet, daß man als Polyolefin eine Mischung wählt, enthaltend:
   - 80 bis 100 % mindestens eines Ethylencopolymers und mindestens eines α-Olefins, ausgewählt aus Propylen und 1-Buten; dieses Copolymer hat eine Dichte zwischen 0,850 und 0,890 - der letzte Wert ist ausgeschlossen - und einen Fließindex zwischen 0,3 und 15 dg/min., und
   - 0 bis 20 % mindestens eines Propylenpolymers.

3. Elastische Nachwirkung aufweisende thermoplastische Zusammensetzung nach einem der Ansprüche 1 und 2, dadurch gekennzeichnet, daß das Ethylen/α-Olefin-Copolymer 9 bis 23 Mol-% mindestens eines α-Olefins enthält, das aus Propylen und 1-Buten ausgewählt ist.

4. Thermoplastische Zusammensetzung nach einem der Ansprüche 1 bis 3, dadurch gekennzeichnet, daß sie darüber hinaus mindestens ein olefinisches Elastomer enthält, welches das Polynorbornen teilweise ersetzt, so daß die Summe von Ethylen/α-Olefin-Copolymer, Polynorbornen und olefinischem Elastomer 100 Gewichtsteile beträgt.

5. Elastische Nachwirkung aufweisende thermoplastische Zusammensetzung nach Anspruch 3, dadurch gekennzeichnet, daß das Ethylen/α-Olefin-Copolymer einen kristallinen Schmelzpunkt J zwischen 100 und 125 °C besitzt.

6. Elastische Nachwirkung aufweisende thermoplastische Zusammensetzung nach einem der Ansprüche 3 bis 5, dadurch gekennzeichnet, daß das Ethylen/α-Olefin-Copolymer einen Polydispersitätsindex zwischen 3,5 und 15 besitzt.

7. Elastische Nachwirkung aufweisende thermoplastische Zusammensetzung nach einem der Ansprüche 3, 5 und 6, dadurch gekennzeichnet, daß das Ethylen/α-Olefin-Copolymer eine mittlere geometrische Masse zwischen 35 und 70 kg/Mol hat.

8. Thermoplastische Zusammensetzung nach Anspruch 2, dadurch gekennzeichnet, daß das Polynorbornen bis zu dem Punkt vernetzt ist, bei dem nicht mehr als 10 % Polynorbornen durch ein Lösemittel extrahiert werden können.

9. Thermoplastische Zusammensetzung nach einem der Ansprüche 1 bis 8, dadurch gekennzeichnet, daß sie zusätzlich mindestens ein Additiv enthält, das aus den weißen oder farbigen Pigmenten, Haftvermittlern, Zerfallsinhibitoren, Stibilisatoren, Verarbeitungshilfstoffen, pulverförmigen Füllstoffen und Gleitmitteln ausgewählt ist.

10. Thermoplastische Zusammensetzung nach Anspruch 9, dadurch gekennzeichnet, daß das Additiv ein pulverförmiger Füllstoff ist, der in einer Menge von bis zu 150 Gewichtsteilen auf 100 Gewichtsteile Polynorbornen verwendet wird.

11. Verfahren zur Herstellung einer thermoplastischen Zusammensetzung nach Anspruch 2, dadurch gekennzeichnet, daß man eine Mischung aus Polynorbornen, einem Weichmacher, einem Ethylen/α-Olefin-Copolymer und einem Vernetzungssystem bei einer ausreichenden Temperatur und für eine zur Vernetzung des Polynorbornens ausreichend lange Dauer knetet.

12. Verfahren nach Anspruch 11, dadurch gekennzeichnet, daß das Kneten bei einer Temperatur zwischen 110 und 220 °C 3 bis 15 Minuten lang durchgeführt wird.